# EUROPÄISCHE PATENTSCHRIFT

(11) **EP 4 026 401 B1**
(45) Veröffentlichungstag und Bekanntmachung des Hinweises auf die Patenterteilung: **26.11.2025**
(21) Anmeldenummer: 20761568.3
(22) Anmeldetag: 25.08.2020
(51) Int. Cl.: H05B 6/64

(54) **HAUSHALTS-MIKROWELLENGERÄT MIT MIKROWELLENDOM**
DOMESTIC MICROWAVE APPLIANCE HAVING A DOME-SHAPED MICROWAVE SHIELD
APPAREIL DOMESTIQUE À MICRO-ONDES DOTÉ D'UNE PROTECTION CONTRE LES MICRO-ONDES EN FORME DE DÔME

(30) Priorität: 05.09.2019 DE 102019213485
(43) Veröffentlichungstag der Anmeldung: 13.07.2022
(73) Patentinhaber: BSH Hausgeräte GmbH, 81739 München (DE)
(72) Erfinder: STERZ, Sebastian, 86845 Großaitingen (DE); KUCHLER, Markus, 83257 Gstadt am Chiemsee (DE); RIGORTH, Kerstin, 84453 Mühldorf (DE); VOGT, Matthias, 74182 Obersulm (DE)
(86) Internationale Anmeldenummer: PCT/EP2020/073691
(87) Internationale Veröffentlichungsnummer: WO 2021/043622

(56) Entgegenhaltungen:
- EP-A1- 0 856 703
- EP-B1- 2 642 822
- JP-A- S5 949 427
- US-A- 4 286 134

## Beschreibung

Die Erfindung betrifft ein Haushalts-Mikrowellengerät, aufweisend einen Garraum und eine den Garraum umgebende Garraumwandung mit einer Garraumöffnung, die durch einen garraumabgewandt angeordneten Mikrowellendom abgedeckt ist.

EP 2 642 822 B1 offenbart eine Kochvorrichtung. Diese umfasst ein Gehäuse, eine im Inneren des Gehäuses angeordnete Muffel, die einen Garraum umgibt, ein Detektionsloch, das an einer Wand einer Seite der Muffel ausgebildet ist, so dass ein im Garraum erzeugter Infrarotstrahl an die Außenseite des Garraums abgegeben werden kann, und eine Infrarotstrahlerfassungsvorrichtung mit einem reflektierenden Spiegel, der eine Vielzahl von Reflexionsflächen aufweist und der dazu konfiguriert ist, um einen Weg eines einfallenden Infrarotstrahls zu ändern, und mit einem Infrarotstrahlsensor, der dazu konfiguriert ist, den abgelenkten Infrarotstrahl zu empfangen, um eine Intensität des Infrarotstrahls zu erfassen, wodurch die Größe des Detektionslochs verringert wird.

US 4286134 A offenbart einen Ofen, der mit einem Infrarotdetektorelement ausgestattet ist, das in der Lage ist, die Temperatur von zu erhitzenden Lebensmitteln berührungslos zu erfassen, wobei ein Reflektor die Infrarotstrahlen auf das Detektorelement konvergiert. Der Reflektor ist schwenkbar angebracht, um eine Platte abzudecken, die eine Einlassöffnung aufweist, um die gebündelten Strahlen vom Reflektor aufzunehmen.

EP 0 856 703 A1 offenbart eine Kochvorrichtung, die einen Infrarotstrahlensensor umfasst, der so angeordnet ist, dass er Infrarotstrahlung von Lebensmitteln von schräg oben erfasst. Der Infrarotstrahlensensor enthält eine Leiterplatte, einen Lichtempfangsabschnitt, einen Fotounterbrecher und einen Zerhacker (Chopper).

JP S59 49427 A offenbart einen Mikrowellenofen, aufweisend einen Garraum und eine den Garraum umgebende Garraumwandung mit einer Garraumöffnung, die durch einen garraumabgewandt angeordneten Mikrowellendom abgedeckt ist, wobei der Mikrowellendom eine Sensoröffnung aufweist, hinter der ein erster Sensor und ein zweiter Sensor angeordnet sind, wobei der erste Sensor direkt in den Garraum gerichtet ist und der zweite Sensor über eine reflektierende Fläche indirekt in den Garraum gerichtet ist.

Es ist die **Aufgabe** der vorliegenden Erfindung, die Nachteile des Standes der Technik zumindest teilweise zu überwinden und insbesondere eine verbesserte Möglichkeit bereitzustellen, Messdaten aus einem Garraum eines Haushalts-Mikrowellengeräts auf thermisch und mikrowellentechnisch vorteilhafte Weise aufzunehmen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Haushalts-Mikrowellengerät, aufweisend einen Garraum und eine den Garraum umgebende Garraumwandung mit einer Öffnung ("Garraumöffnung"), die durch einen insbesondere garraumabgewandt angeordneten Mikrowellendom abgedeckt ist, wobei
- der Mikrowellendom mindestens eine erste Öffnung ("erste Sensoröffnung"), hinter der ein erster Sensor stationär angeordnet ist, und eine zweite Öffnung ("zweite Sensoröffnung"), hinter der ein zweiter Sensor stationär angeordnet ist, aufweist,
- der erste Sensor direkt in den Garraum gerichtet ist und
- der zweite Sensor über eine reflektierende Fläche des Mikrowellendoms indirekt in den Garraum gerichtet ist.

Dieses Haushalts-Mikrowellengerät ergibt den Vorteil, dass nur noch eine Garraumöffnung für mehrere Sensoren vorgesehen ist. Da Garraumöffnungen meist aufwändig thermisch isoliert und mikrowellendicht abgeschlossen werden müssen, wird so eine Möglichkeit zur Aufnahme von Messdaten bereitgestellt, bei der im Vergleich zum Vorsehen einer Garraumöffnung pro Sensor ein geringerer Wärmefluss aus dem Garraum und ein geringerer Verlust von Mikrowellen auftritt. Durch die indirekte Ausrichtung des zweiten Sensors wird die Möglichkeit eröffnet, den Mikrowellendom besonders kompakt zu gestalten. Auch ergibt sich so vorteilhafterweise eine besonders große Freiheit bei der Positionierung des zweiten Sensors. Da durch die reflektierende Fläche nur eine Umlenkung der gemessenen Strahlung vorgenommen wird, aber keine Umlenkung von Wrasen, wird ferner die Wahrscheinlichkeit einer Verschmutzung des zweiten Sensors durch Wrasen herabgesetzt. Durch die stationäre Anordnung der Sensoren wird zudem eine besonders robuste, kompakte und zuverlässige Anordnung ermöglicht. Der zweite Sensor kann darüber hinaus durch die Umlenkung der gemessenen Strahlung öffnungsferner und/oder in einem kühleren Bereich montiert werden und/oder leichter durch einen Kühlluftstrom gekühlt werden.

Das Haushalts-Mikrowellengerät kann ein eigenständiges Mikrowellengerät oder ein Mikrowellen-Kombinationsgerät wie ein Mikrowellengerät mit mindestens einem zusätzlichen IR-Heizstrahler (z.B. einem elektrischen Widerstandsheizelement) sein. Insbesondere kann das Haushalts-Mikrowellengerät ein Backofen mit zusätzlicher Mikrowellenfunktionalität sein. Das Haushalts-Mikrowellengerät kann eine oder mehrere typische Komponenten eines solchen Geräts wie mindestens einen Mikrowellengenerator (Magnetron, halbleiterbasierter Mikrowellengenerator), einen Inverter, mindestens eine zwischen dem Mikrowellengenerator und dem Garraum angeordnete Mikrowellenführung, mindestens eine Drehantenne, mindestens einen Wobbler oder Modenrührer ("Stirrer"), einen Drehteller, usw. auf grundsätzlich bekannte Weise aufweisen.

Die Garraumwandung weist eine typischerweise frontseitige Beschickungsöffnung auf, die mittels einer mikrowellendichten Tür verschließbar ist. Die Garraumwandung kann auch als Muffel bezeichnet werden.

Die Garraumöffnung kann in einer Seitenwand der Garraumwandung eingebracht sein, z.B. in einer linken Seitenwand, einer rechten Seitenwand, einer Decke, einer Rückwand und/oder einem Boden der Garraumwandung. Die Garraumöffnung kann sich aber auch in einer Kante oder Übergang zwischen Seitenbereichen und/oder in einer Ecke der Garraumwandung befinden. Die Garraumöffnung entspricht insbesondere einer ebenen Fläche, welche durch den Rand der Garraumöffnung aufgespannt wird. Die Garraumöffnung kann auch als Wandungsöffnung bezeichnet werden.

Auf der dem Garraum abgewandten Seite der Garraumöffnung befindet sich der Mikrowellendom, der die Garraumöffnung überdeckt. Insbesondere sitzt der Mikrowellendom mikrowellendicht auf einem garraumabgewandten Randbereich der Garraumöffnung auf. Mikrowellendome dienen zur Abschirmung von aus dem Garraum durch die Garraumöffnung austretender Mikrowellenstrahlung und bestehen typischerweise zumindest an ihrer garraumzugewandten Innenseite aus elektrisch leitfähigem Material. Sie sind als sog. "Cut-Off-Hohlleiter" geformt, wobei typischerweise die in dem Mikrowellendom herrschende Leistungsdichte der Mikrowellenstrahlung mit steigendem Abstand von der Garraumöffnung sinkt. Die Sensoröffnungen befinden sich vorteilhafterweise in einem Bereich des Mikrowellendoms mit merklich verringerter oder sogar praktisch vernachlässigbarer Mikrowellendichte. Der Mikrowellendom ist insbesondere schalenartig geformt. Ein Rand der offenen Seite liegt insbesondere außenseitig auf der Garraumwandung auf, z.B. mittels eines Flanschs. Die Form des Mikrowellendoms ist grundsätzlich beliebig und kann z.B. eine halbkugelschalenartige, kegelartige, kegelstumpfartige, pyramidenförmige, pyramidenstrumpfförmige, rechteckige, usw. Grundform aufweisen. Die Grundfläche kann also rund oder rechteckig sein. Es ist zur effektiven Einhaltung der Cut-Off-Eigenschaft besonders vorteilhaft, wenn ein Öffnungswinkel des Doms in einem Bereich zwischen 40° und 80° liegt und eine Höhe des Mikrowellendoms im Bereich von 30 mm bis 70 mm liegt.

Der die mindestens zwei Sensoröffnungen aufweisende Mikrowellendom ist insbesondere ein eigenständiger Mikrowellendom. Dazu weist der Mikrowellendom außer den Sensoröffnungen in einer Weiterbildung keine weiteren dem Garraum ausgesetzten Öffnungen auf, sondern lediglich möglicherweise seitliche Befestigungsöffnungen usw. Speziell ist in dem eigenständigen Mikrowellendom keine Antenne, insbesondere Drehantenne, untergebracht. Es ist eine Weiterbildung, dass die Drehantenne in einem weiteren Mikrowellendom, dem sog. "Antennendom", untergebracht ist.

Der Mikrowellendom weist in seiner einfachsten Form eine erste Sensoröffnung und ein zweite Sensoröffnung auf, kann aber auch noch weitere (dritte, vierte, usw.) Sensoröffnungen aufweisen, hinter denen sich jeweilige weitere Sensoren befinden. Dass sich Sensoren "hinter" einer Sensoröffnung befindet, bedeutet insbesondere, dass die Sensoren auf einer garraumabgewandten Seite des Mikrowellendoms angeordnet oder angebracht sind.

Dass der erste Sensor "direkt" in dem Garraum gerichtet ist, umfasst insbesondere, dass aus dem Garraum durch die Garraumöffnung in den Mikrowellendom eintretende Messstrahlung ohne Umlenkung (also direkt) durch die erste Sensoröffnung auf den ersten Sensor trifft.

Dass der zweite Sensor über eine reflektierende Fläche des Mikrowellendoms "indirekt" in den Garraum gerichtet ist, umfasst insbesondere, dass aus dem Garraum durch die Garraumöffnung in den Mikrowellendom eintretende Messstrahlung erst nach Umlenkung (also indirekt) durch die zweite Sensoröffnung auf den zweiten Sensor trifft. Die reflektierende Fläche kann der Grundform der Innenseite des Mikrowellendoms entsprechen oder davon abweichen, um eine gewünschte Bildverzerrung und/oder einen gewünschten Bildausschnitt zu erreichen.

Es ist eine Ausgestaltung, dass der erste Sensor eine optische bzw. eine in dem für den Menschen sichtbaren Spektralbereich empfindliche Kamera ist, die reflektierende Fläche eine Infrarotstrahlung reflektierende Fläche ist und der zweite Sensor eine Infrarot (IR)-Kamera ist. So wird der Vorteil erreicht, dass durch eine Garraumöffnung sowohl Bilder im sichtbaren Spektralbereich als auch IR-Bilder aus dem Garraum aufnehmbar sind. Aufgrund der gleichen Sensoröffnung wird eine besonders hohe Übereinstimmung der Sicht- oder Blickfelder von optischer Kamera und IR-Kamera ermöglicht. Anstelle einer IR-Kamera können allgemein andere IR-Sensoren verwendet werden, z.B. ein Thermosäule oder eine Gruppe von Thermosäulen usw.

Jedoch ist auch die umgekehrte Anordnung möglich, bei welcher der erste Sensor eine IR-Kamera, die reflektierende Fläche eine sichtbares Licht reflektierende Fläche ist und der zweite Sensor eine optische Kamera ist. Wenn die Erfindung im Folgenden anhand der obigen Ausgestaltung mit der optischen Kamera als erstem Sensor und der IR-Kamera als zweitem Sensor beschrieben ist, ist damit auch die umgekehrte Anordnung analog umfasst.

Allgemein können aber auch andere Sensoren als eine Kamera als erster Sensor vorhanden sein, z.B. mindestens ein chemischer Sensor, Sauerstoffsensor, Luftfeuchtigkeitssensor, Lidar, Ultraschallsensor, usw.

Es ist eine Ausgestaltung, dass die reflektierende Fläche des Mikrowellendoms so eingerichtet (d.h., angeordnet und geformt) ist, dass die Sicht- oder Blickfelder der optischen Kamera und der IR-Kamera in dem Garraum zumindest weitgehend übereinstimmen. Insbesondere kann eines der Sichtfelder ganz in dem anderen Sichtfeld liegen. Dadurch wird der Vorteil erreicht, dass eine hohe Übereistimmung der Sicht- oder Blickfelder von optischer Kamera und IR-Kamera besonders zuverlässig erreicht wird.

Es ist eine Ausgestaltung, dass die reflektierende Fläche an einer Wand des Mikrowellendoms aufgebracht ist, insbesondere fest oder stationär. So wird der Vorteil erreicht, dass sich die reflektierende Fläche besonders preiswert und kompakt umsetzen lässt. Dabei kann ausgenutzt werden, dass die meisten elektrisch leitfähigen Konstruktionsmaterialien, die der Mikrowellendom zur Mikrowellenschirmung innenseitig aufweist, auch eine gute IR-Reflexionsfähigkeit besitzen. Der Nachteil der Verwendung elektrisch leitfähiger Materialien - nämlich die durch sie verstärkte thermische Ausleitung - wird nun durch den Vorteil ihrer optischen und/oder IR-Reflexionsfähigkeit kompensiert. Die elektrisch leitfähige Innenseite des Mikrowellendoms wird also gleichzeitig als optisch und/oder infrarot reflektierende Fläche verwendet. Geeignete elektrisch leitfähige Konstruktionsmaterialien umfassen z.B. Metalle wie Kupfer, Silber, Aluminium usw. Es ist eine Weiterbildung, dass die Innenseite des Mikrowellendoms metallisch beschichtet ist.

Es ist eine Ausgestaltung, dass die reflektierende Fläche an einem an dem Mikrowellendom verschwenkbar angebrachten Spiegelelement vorhanden ist und das Spiegelelement mindestens zwei Stellungen, insbesondere Endstellungen, aufweist, von denen in einer ersten Stellung, insbesondere Endstellung, die optische Kamera direkt und die IR-Kamera über die reflektierende Fläche des Spiegelelements indirekt in dem Garraum gerichtet sind ("Betriebsstellung") und in einer zweiten Stellung, insbesondere Endstellung, das Spiegelelement die optische Kamera und/oder die IR-Kamera gegen den Garraum abdeckt ("Ruhestellung"). So wird der Vorteil erreicht, dass das Spiegelelement in der zweiten Stellung als thermische Abdeckung dient und dadurch sich die an den Sensoren anfallende Wärmebelastung oder Temperatur deutlich reduziert. Es ist eine Weiterbildung, dass das Haushalts-Mikrowellengerät dazu eingerichtet ist, das Spiegelelement nur dann in die erste Stellung zu verbringen, wenn mindestens eine der Kameras ein Bild aufnehmen soll (z.B. alle 5 s, 10 s, 30 s, 1 min usw.), und es danach wieder in die zweite Stellung zu verbringen. Aus dem Garraum aufsteigender Wrasen trifft in der zweiten Stellung insbesondere nur auf die nicht zur Reflexion verwendete Rückseite des Spiegelelements, so dass dann außerhalb der Messphasen auch die vorderseitige Reflexionsfläche vor Verschmutzung geschützt ist. Noch ein Vorteil besteht darin, dass die optische Kamera und die IR-Kamera gleichzeitig Bilder aus dem Garraum aufnehmen können.

Es ist eine Ausgestaltung, dass die reflektierende Fläche an einem an dem Mikrowellendom verschwenkbar angebrachten Spiegelelement vorhanden ist und das Spiegelelement zwei Stellungen, insbesondere Endstellungen, aufweist, von denen in einer ersten Stellung, insbesondere Endstellung, das Spiegelelement die IR-Kamera gegen den Raum des Mikrowellendoms abdeckt, während die optische Kamera direkt in dem Garraum gerichtet ist ("Ruhestellung") und in einer zweiten Stellung, insbesondere Endstellung, die IR-Kamera über die reflektierende Fläche des Spiegelelements indirekt in dem Garraum gerichtet ist, während die optische Kamera durch das Spiegelelement abgedeckt ist ("Betriebsstellung"). In der zweiten Stellung gibt das Spiegelelement also der IR-Kamera die Sicht in den Garraum frei. Es ist eine Weiterbildung, dass das Haushalts-Mikrowellengerät dazu eingerichtet ist, das Spiegelelement nur dann in die zweite Stellung zu verbringen, wenn die IR-Kamera ein IR-Bild aufnehmen soll (z.B. alle 5 s, 10 s, 30 s, 1 min usw.), und es danach wieder in die erste Stellung zu verbringen. Aus dem Garraum aufsteigender Wrasen trifft in der ersten Stellung nur auf die Rückseite des Spiegelelements, so dass dann auch vorderseitige IR-Reflexionsfläche außerhalb der Bildaufnahmephasen der IR-Kamera vor Verschmutzung geschützt ist.

Es ist eine Weiterbildung, dass die Garraumöffnung, die erste Sensoröffnung und/oder die zweite Sensoröffnung mittels mindestens eines zugehörigen Abdeckelements abdeckbar sind. Mindestens ein Abdeckelement kann stationär an der zugehörigen Öffnung angebracht sein. Mindestens ein Abdeckelement kann an der zugehörigen Öffnung zum wahlweisen Abdecken oder Freigeben der Öffnung beweglich (z.B. verschwenkbar, drehbar, verschiebbar, usw.) angebracht sein.

Es ist eine Ausgestaltung, dass die erste Sensoröffnung mittels eines Abdeckelements aus optisch durchlässigem Material dauerhaft abgedeckt ist. Das optisch durchlässige Material kann z.B. Glas sein, das Abdeckelement z.B. eine Glasscheibe. Das Abdeckelement kann IR-undurchlässig sein, was vorteilhafterweise eine thermische Belastung der optischen Kamera senkt.

Es ist eine Weiterbildung, dass die zweite Sensoröffnung mittels eines Abdeckelements aus IR-durchlässigem Material dauerhaft abgedeckt ist. Das Abdeckelement kann optisch durchlässig sein, was eine höhere Materialvielfalt für das Abdeckelement ermöglicht.

Es ist eine Ausgestaltung, dass die zweite Sensoröffnung mittels eines beweglichen Abdeckelements aus IR-undurchlässigem Material wahlweise abdeckbar und freigebbar ist. Dadurch wird der Vorteil erreicht, dass die IR-Kamera thermisch besonders effektiv geschützt ist. Zudem ist eine solche Ausgestaltung besonders preiswert, da IR-durchlässige Materialien vergleichsweise teuer und/oder empfindlich sind.

Es ist eine Weiterbildung, dass die erste Sensoröffnung mittels eines beweglichen Abdeckelements aus IR-undurchlässigem Material wahlweise abdeckbar und freigebbar ist.

Dadurch wird der Vorteil erreicht, dass die optische Kamera thermisch besonders effektiv schützbar ist. Dieses Abdeckelement ist in einer Weiterbildung auch optisch undurchlässig, wodurch Materialien mit besonders hohem thermischen Übergangswiderstand auswählbar sind.

Es ist eine Ausgestaltung, dass die Garraumöffnung gegen den Mikrowellendom mittels eines beweglichen Abdeckelements wahlweise abdeckbar und freigebbar ist. Dadurch wird der Vorteil erreicht, dass bei abdeckend positioniertem Abdeckelement das gesamte Innere des Mikrowellendoms insbesondere einschließlich aller Sensoröffnungen gegen Wärmestrahlung und Wrasen schützbar ist. Das Abdeckelement kann optisch transparent oder undurchlässig sein.

Es ist eine Weiterbildung, dass das Abdeckelement in seiner die Garraumöffnung freigebenden Position zwischen der Garraumwandung und dem Mikrowellendom angeordnet ist oder in einer in dem Rand des Mikrowellendoms ausgebildeten Tasche oder Ausstülpung untergebracht ist, um den Bereich des Abdeckelements für jede seiner Positionen mikrowellendicht zu halten.

Es ist Weiterbildung, dass das Abdeckelement an dem Mikrowellendom in einer Ebene zwischen seinem Rand bzw. der Garraumwandung und der der Garraumöffnung am nächsten gelegenen Sensoröffnung, insbesondere der zweiten Sensoröffnung, angeordnet ist. Somit kann außenseitig zwischen der Garraumwandung und dem Abdeckelement bereits eine Wärmeisolationsschicht eingebracht werden. Dies hat den Vorteil, dass ein größerer Wärmewiderstand zwischen dem Garraum und den Sensoren entsteht, was sich vorteilhaft auf die thermische Entkopplung der Sensoren von dem Garraum auswirkt. Es ist eine Weiterbildung, dass das Abdeckelement in einer Tasche oder Ausstülpung des Mikrowellendoms ausgebildet ist, um den Mikrowellendom auch im Bereich des Abdeckelements für jede seiner Positionen mikrowellendicht zu halten.

Es ist eine Ausgestaltung, dass das die Garraumöffnung abdeckende Abdeckelement optisch durchlässig und IR-undurchlässig ist. Dadurch wird der Vorteil erreicht, dass die optische Kamera auch bei vor die Garraumöffnung verbrachtem Abdeckelement noch Bilder aus dem Garraum aufnehmen kann.

Für Mikrowellendome werden in der Regel thermisch stabile, hart-spröde Materialien verwendet. Diese Materialien können bei Verwendung auch als Material einer Abdeckung dann problematisch werden, wenn sie brechen oder sich aus einer Halterung lösen und insbesondere bei deckenseitiger Anordnung des Mikrowellendoms unerkannt in das Gargut herabfallen. Ein weiterer Vorteil der Ausgestaltung mit einer optischen Kamera und/oder IR-Kamera als Sensor(en) ist es, dass dann mittels der Kamera(s) erkannt werden kann, ob eine Abdeckungen nicht mehr ihre Betriebsstellung wechselt oder ganz fehlt: entweder ist dann keine Bildaufnahme möglich, oder eine bestimmte Verzerrung oder Intensitätsdämpfung, wie sie etwa bei einer Glasabdeckung im Falle einer optischen Kamera gegeben wäre, wird nicht erreicht, und das resultierende Bild ist deutlich unterschiedlich zu einem zuletzt aufgenommenen Bild oder zu einem fest vorgegebenen Referenzbild. Das Fehlen, eine Beschädigung oder eine Fehlfunktion einer Abdeckung können also durch Bildauswertung, z.B. Bildvergleich, festgestellt werden.

Es ist eine Ausgestaltung, dass an dem Mikrowellendom außenwandig an zumindest einer der Sensoröffnungen, insbesondere der zweiten Sensoröffnung, ein weiterer Mikrowellendom oder Kragen angebracht ist. Dadurch wird der Vorteil erreicht, dass die zugehörige Sensoröffnung, insbesondere zweite Sensoröffnung, sich in einem Bereich des (Haupt-) Mikrowellendoms befinden kann, an dem noch eine nicht vernachlässigbare Mikrowellenleistung auftritt, und dann ein Durchtritt von Mikrowellenstrahlung durch die zweite Sensoröffnung in das Geräteinnere besonders zuverlässig blockiert wird.

Es ist eine Ausgestaltung, dass sich die erste Sensoröffnung an einem weitesten von der Garraumöffnung befindlichen Bereich des Mikrowellendoms befindet. Ist der Mikrowellendom z.B. halbkugelschalenförmig ausgebildet, befindet sich die erste Sensoröffnung insbesondere mittig im Bereich des Scheitelpunkts. Die zweite Sensoröffnung (und jede weitere Sensoröffnung) ist dann außermittig und näher zu der Garraumöffnung angeordnet.

In der einfachsten Ausführung verfügt die oben beschriebene Sensoranordnung über keine beweglichen Teile, also auch über keine beweglichen Abdeckungen. Konstruktion und Fertigung gestalten sich dadurch besonders einfach. Ferner wird im Betrieb über die Gerätelebensdauer so eine besonders robuste und stabile Funktion erreicht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht einen Ausschnitt aus einem Haushalts-Mikrowellengerät gemäß einem ersten Ausführungsbeispiel;
- Fig.2: zeigt als Schnittdarstellung in Seitenansicht einen Ausschnitt aus einem Haushalts-Mikrowellengerät gemäß einem zweiten Ausführungsbeispiel;
- Fig.3: zeigt als Schnittdarstellung in Seitenansicht einen Ausschnitt aus einem Haushalts-Mikrowellengerät gemäß einem dritten Ausführungsbeispiel;
- Fig.4: zeigt als Schnittdarstellung in Seitenansicht einen Ausschnitt aus einem Haushalts-Mikrowellengerät gemäß einem vierten Ausführungsbeispiel; und
- Fig.5: zeigt als Schnittdarstellung in Seitenansicht einen Ausschnitt aus einem Haushalts-Mikrowellengerät gemäß einem fünften Ausführungsbeispiel.

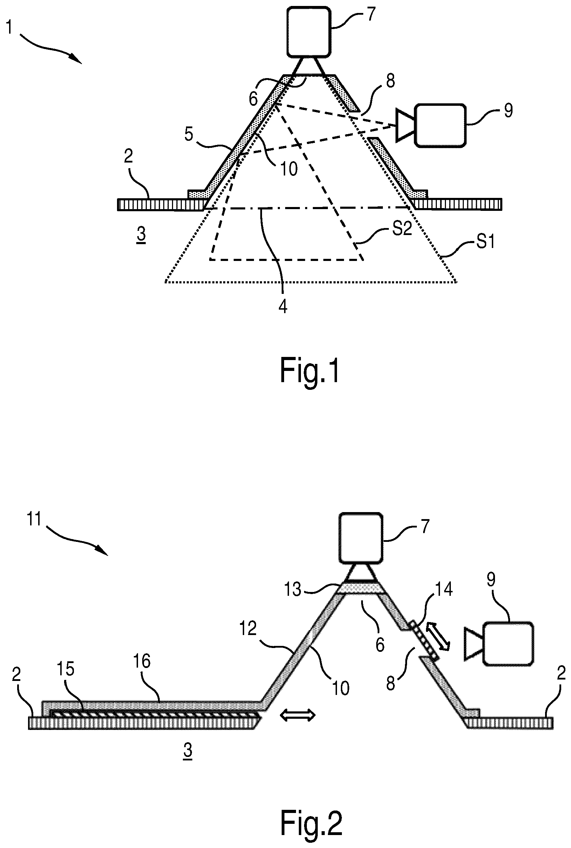

**Fig.1** zeigt als Schnittdarstellung in Seitenansicht einen Ausschnitt aus einem Haushalts-Mikrowellengerät 1 im Bereich einer Decke 2 einer Garraumwandung. Die Garraumwandung umgibt einen Garraum 3. Das Haushalts-Mikrowellengerät 1 weist einen Mikrowellengenerator (o. Abb.) auf, der dazu eingerichtet ist, Mikrowellen zu erzeugen. Die Mikrowellen werden in den Garraum geleitet, z.B. über eine Mikrowellenführung (o. Abb.), um dort befindliches Gargut (o. Abb.) zu beaufschlagen.

In der Decke 2 befindet sich eine Wandungs- oder Garraumöffnung 4, die durch einen garraumabgewandt an der Decke 2 angeordneten Mikrowellendom 5 abgedeckt ist. Der Mikrowellendom 5 weist hier beispielhaft eine kegelstumpf- oder pyramidenstumpfförmige Grundform auf. An der am weitesten von der Garraumöffnung 4 entfernten Spitze ist in dem Mikrowellendom 5 eine erste Sensoröffnung 6 vorhanden, hinter der ein erster Sensor in Form einer optischen Kamera 7 stationär angeordnet ist. In einer Seitenwand des Mikrowellendoms 5 befindet sich eine zweite Sensoröffnung 8, hinter der ein zweiter Sensor in Form einer IR-Kamera 9 stationär angeordnet ist. Die optische Kamera 7 ist senkrecht nach unten direkt in den Garraum 3 gerichtet, wie durch deren Sichtfeld S1 angedeutet. Die IR-Kamera 9 ist über eine IR-Strahlung reflektierende Fläche 10 des Mikrowellendoms 5 indirekt in den Garraum 3 gerichtet, wie durch deren Sichtfeld S2 angedeutet.

Die reflektierende Fläche 10 befindet sich gegenüber der zweiten Sensoröffnung 8 und wird durch eine Innenfläche des Mikrowellendoms 5 gebildet. Die Form der reflektierenden Fläche 10 kann von der kegelstumpf- oder pyramidenstumpfförmigen Grundform der Innenseite des Mikrowellendoms 5 abweichen. Das Sichtfeld S1 der optischen Kamera 7 und das Sichtfeld S2 der IR-Kamera 9 stimmen in dem Garraum 3 zumindest ungefähr überein, zeigen also zumindest ungefähr einen gleichen Bildausschnitt des Garraums 3.

**Fig.2** zeigt als Schnittdarstellung in Seitenansicht einen Ausschnitt aus einem Haushalts-Mikrowellengerät 11. Das Haushalts-Mikrowellengerät 11 ist ähnlich zu dem Haushalts-Mikrowellengerät 1 aufgebaut, weist aber einen im Vergleich zu dem Mikrowellendom 5 abgewandelten Mikrowellendom 12 auf.

So ist die erste Sensoröffnung 6 durch ein Abdeckelement in Form einer optisch transparenten Schutzscheibe 13 dauerhaft abgedeckt, z.B. mittels einer Schutzscheibe 13 aus Glas, die für einen zusätzlichen Wärmeschutz IR-verspiegelt sein kann.

Die zweite Sensoröffnung 8 ist mittels eines weiteren, motorisch beweglichen Abdeckelements ("Shutter") 14 aus IR-undurchlässigem Material wahlweise abdeckbar und freigebbar, wie durch den Doppelpfeil angedeutet. Der Shutter 14 kann hier parallel zu der zweiten Sensoröffnung 8 bewegt werden.

Während eines Betriebsablaufs des Haushalts-Mikrowellengeräts 1 oder 11 zum Behandeln von Gargut werden in der Regel optische Aufnahmen oder Bilder von der optischen Kamera 7 und IR-Aufnahmen oder Bilder von der IR-Kamera 9 in bestimmten Zeitabständen aufgenommen, z.B. alle 5 Sekunden, 10 Sekunden, 30 Sekunden, 1 min, o.ä. Die Kameras 7 und 9 sind also nur für einen geringen Zeitanteil des Betriebsablaufs in Betrieb. Daher braucht auch der Shutter 14 immer nur kurzzeitig von der zweiten Sensoröffnung 8 entfernt zu werden, um eine IR-Aufnahme zu ermöglichen, und kann dann wieder zum Schutz der IR-Kamera 9 gegenüber einer Wärmeeinwirkung und Wrasen vor die zweiten Sensoröffnung 8. verbracht werden.

Darüber hinaus ist die Garraumöffnung 4 mittels noch eines weiteren motorisch beweglichen Abdeckelements ("Domabdeckung") 15 wahlweise abdeckbar und freigebbar, wie durch den zugehörigen Doppelpfeil angedeutet. Die Domabdeckung 15 kann dazu verschwenkt, gedreht, linearverschoben usw. werden.

Die Domabdeckung 15 kann alternativ oder zusätzlich zu dem Abdeckelement 13 und/oder zu dem Shutter 14 vorhanden sein. Die Domabdeckung 15 ist hier vorteilhafterweise optisch durchlässig und IR-undurchlässig, z.B. eine IR-verspiegelte Glasscheibe. Die Domabdeckung 15 braucht immer nur kurzzeitig von der Garraumöffnung 4 entfernt zu werden, um eine IR-Aufnahme zu ermöglichen, während die optische Kamera 7 durch die Domabdeckung 15 hindurch Bilder aus dem Garraum 3 aufnehmen kann. Sie kann dann wieder zum Schutz des Mikrowellendoms 12, der optischen Kamera 2 und der IR-Kamera 9 gegenüber einer Wärmeeinwirkung und Wrasen vor die Garraumöffnung 4 bewegt werden. Alternativ kann die Domabdeckung 15 die Garraumöffnung 4 auch für eine Aufnahme der optischen Kamera 7 freigeben, z.B. wenn die Domabdeckung 15 optisch undurchsichtig ist.

Die Domabdeckung 15 kann in seiner die Garraumöffnung 4 freigebenden Position in einer Tasche 16 des Mikrowellendoms 12 angeordnet sein, oder auch außerhalb des Mikrowellendoms 12. Der Bereich der Domabdeckung 15 ist mikrowellendicht ausgebildet, wann insbesondere dann konstruktiv einfach umsetzbar ist, wenn die Tasche 16 vorhanden ist.

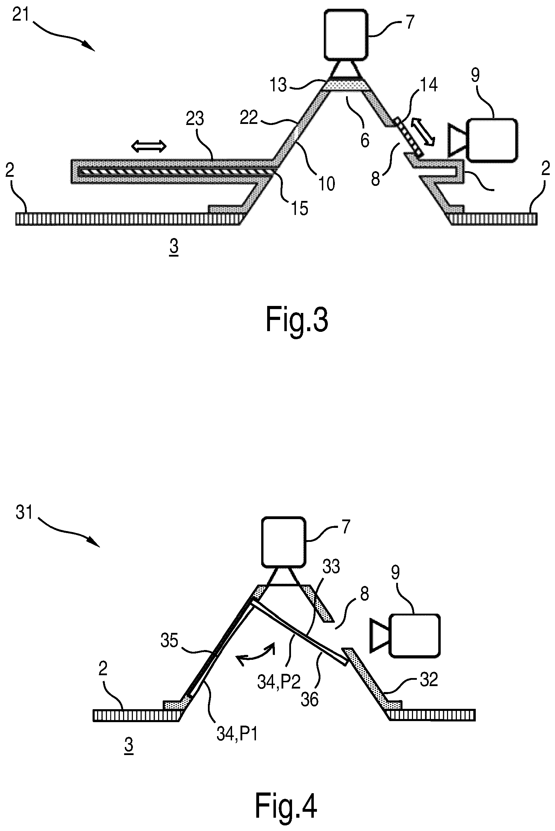

**Fig.3** zeigt als Schnittdarstellung in Seitenansicht einen Ausschnitt aus einem Haushalts-Mikrowellengerät 21. Das Haushalts-Mikrowellengerät 21 ist ähnlich zu dem Haushalts-Mikrowellengerät 11 aufgebaut, weist aber einen im Vergleich zu dem Mikrowellendom 12 abgewandelten Mikrowellendom 22 auf. An dem Mikrowellendom 22 befindet sich die Tasche 23 mit der Domabdeckung 15 nicht direkt im Anschluss an die Decke 2 der Garraumwandung, sondern auf einer Ebene zwischen der Decke 2 der Garraumwandung und der zweiten Sensoröffnung 8. Dies führt zu einer noch vorteilhafteren thermischen Entkopplung der Kameras 7 und 9 von dem Garraum 3.

**Fig.4** zeigt als Schnittdarstellung in Seitenansicht einen Ausschnitt aus einem Haushalts-Mikrowellengerät 31. Das Haushalts-Mikrowellengerät 31 ist ähnlich zu dem Haushalts-Mikrowellengerät 1 aufgebaut, weist aber einen im Vergleich zu dem Mikrowellendom 5 abgewandelten Mikrowellendom 32 auf.

Die reflektierende Fläche 33 ist nun an einem in dem Mikrowellendom 32 innenseitig angeordneten, an dem Mikrowellendom 32 verschwenkbar angebrachten Spiegelelement 34 vorhanden. Das Spiegelelement 34 kann zwei Endstellungen einnehmen, von denen in einer ersten Endstellung P1 die IR-Kamera 9 über die reflektierende Fläche 33 des Spiegelelements 34 indirekt in dem Garraum 3 gerichtet ist. Dabei ist das Spiegelelement 34 in einer der zweiten Sensoröffnung 8 gegenüberliegenden innenseitigen Aufnahme oder Tasche 35 des Mikroellendoms 32 eingelassen. Dies ergibt den Vorteil, dass das Spiegelelement 34 nicht oder nicht wesentlich in das Blickfeld S1 der optischen Kamera 7 gerät.

In seiner zweiten Endstellung P2 ist das Spiegelelement 34 in den Mikrowellendom 32 hinein verschwenkt, so dass es in dessen Innenraum hineinragt und die IR-Kamera 9 und auch die optische Kamera 7 gegenüber dem Garraum 3 abdeckt. Dabei ist die der reflektierenden Fläche 33 abgewandte Seite 36 des Spiegelelements 34 dem Garraum 3 zugewandt, so dass in der zweiten Endstellung P2 auch die reflektierende Fläche 33 gegenüber dem Garraum 3 geschützt ist.

Vorteilhafterweise entspricht die zweite Endstellung P2 der Ruhestellung oder Normalstellung des Spiegelelements 34, aus der sie nur dann motorisch in die als Betriebs- oder Aufnahmestellung dienende Endstellung P1 verschwenkt wird, wenn mittels der optischen Kamera 7 und/oder der IR-Kamera 9 ein Bild aufgenommen werden soll. Die optische Kamera 7 und/oder die IR-Kamera 9 können in der Betriebsstellung gleichzeitig ein Bild aus dem Garraum 3 aufnehmen.

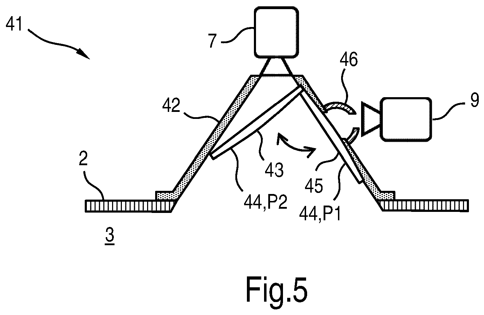

**Fig.5** zeigt als Schnittdarstellung in Seitenansicht einen Ausschnitt aus einem Haushalts-Mikrowellengerät 41. Das Haushalts-Mikrowellengerät 41 ist ähnlich zu dem Haushalts-Mikrowellengerät 1 aufgebaut, weist aber einen im Vergleich zu dem Mikrowellendom 5 abgewandelten Mikrowellendom 42 auf.

Die reflektierende Fläche 43 ist an einem in dem Mikrowellendom 42 innenseitig angeordneten, an dem Mikrowellendom 42 verschwenkbar angebrachten Spiegelelement 44 vorhanden.

Das Spiegelelement 44 kann zwei Endstellungen einnehmen, von denen in einer ersten Endstellung P1 das Spiegelelement 44 die zweite Sensoröffnung 8 abdeckt. Es kann dazu in einer die zweite Sensoröffnung 8 umfassenden Aufnahme oder Tasche (o. Abb.) des Mikroellendoms 42 eingelassen sein. Dies ergibt den Vorteil, dass das Spiegelelement 44 in der ersten Endstellung P1 nicht oder nicht wesentlich in das Blickfeld S1 der optischen Kamera 7 gerät.

In der ersten Endstellung P1 ist das Sichtfeld S1 der optischen Kamera 7 in den Garraum 3 freigegeben, so dass die optische Kamera 7 Bilder aus dem Garraum 3 aufnehmen kann, die IR-Kamera hingegen nicht. In der ersten Endstellung P1 ist die der reflektierenden Fläche 43 abgewandte Seite 45 des Spiegelelements 44 dem Garraum 3 zugewandt, so dass auch die reflektierende Fläche 43 gegenüber dem Garraum 3 geschützt ist.

In seiner zweiten Endstellung P2 ist das Spiegelelement 44 in den Mikrowellendom 42 hinein verschwenkt, so dass es in dessen Innenraum hineinragt und die optische Kamera 7 gegenüber dem Garraum 3 abdeckt. Dann ist die IR-Kamera 9 über die reflektierende Fläche 43 indirekt in dem Garraum 3 gerichtet. In der zweiten Endstellung P2 kann nur die IR-Kamera 9 Bilder aus dem Garraum 3 aufnehmen.

Insbesondere, falls die erste Sensoröffnung 6 von einer Schutzscheibe 13 abgedeckt sein sollte (o. Abb.), entspricht die erste Endstellung P1 der Ruhestellung oder Normalstellung des Spiegelelements 44, aus der sie nur dann motorisch in die als Betriebs- oder Aufnahmestellung bezeichnete zweite Endstellung P2 verschwenkt wird, wenn mittels der IR-Kamera 9 ein Bild aufgenommen werden soll.

Vorliegend ist an dem Mikrowellendom 42 außenwandig an der zweiten Sensoröffnung 8 ein weiterer Mikrowellendom 46 oder ein Kragen angebracht, der selbst wieder eine Öffnung aufweist, durch welche die IR-Kamera 9 durch den Mikrowellendom 46 in den Mikrowellendom 42 blicken kann. Dies ergibt den Vorteil, dass sich die zweite Sensoröffnung 8 so nahe an der Garraumöffnung 4 befinden kann, dass Mikrowellenstrahlung in einem nicht vernachlässigbaren Maß durch sie hindurchtreten kann, da diese Mikrowellenstrahlung dann durch den weiteren Mikrowellendom 46 blockiert wird.

Selbstverständlich ist die vorliegende Erfindung nicht auf das gezeigte Ausführungsbeispiel beschränkt.

So können die Schutzscheibe 13, der Shutter 14 und/oder die Domabdeckung 15 in allen gezeigten Ausführungsbeispielen verwendet werden.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Haushalts-Mikrowellengerät
- 2: Decke
- 3: Garraum
- 4: Garraumöffnung
- 5: Mikrowellendom
- 6: Erste Sensoröffnung
- 7: Optische Kamera
- 8: Zweite Sensoröffnung
- 9: IR-Kamera
- 10: Reflektierende Fläche
- 11: Haushalts-Mikrowellengerät
- 12: Mikrowellendom
- 13: Schutzscheibe
- 14: Shutter
- 15: Domabdeckung
- 16: Tasche für Domabdeckung
- 21: Haushalts-Mikrowellengerät
- 22: Mikrowellendom
- 23: Tasche für Domabdeckung
- 31: Haushalts-Mikrowellengerät
- 32: Mikrowellendom
- 33: Reflektierende Fläche
- 34: Spiegelelement
- 35: Tasche
- 36: Der reflektierenden Fläche abgewandte Seite
- 41: Haushalts-Mikrowellengerät
- 42: Mikrowellendom
- 43: Reflektierende Fläche
- 44: Spiegelelement
- 45: Der reflektierenden Fläche abgewandte Seite des Spiegelelements
- 46: Weiterer Mikrowellendom
- P1: Erste Endstellung
- P2: Zweite Endstellung
- S1: Sichtfeld der optischen Kamera
- S2: Sichtfeld der IR-Kamera

## Patentansprüche

1. Haushalts-Mikrowellengerät (1; 11; 21; 31; 41), aufweisend einen Garraum (3) und eine den Garraum (3) umgebende Garraumwandung mit einer Garraumöffnung (4), die durch einen garraumabgewandt angeordneten Mikrowellendom (5; 12; 22; 32; 42) abgedeckt ist, wobei
- der Mikrowellendom (5; 12; 22; 32; 42) mindestens eine erste Sensoröffnung (6), hinter der ein erster Sensor (7) angeordnet ist, und eine zweite Sensoröffnung (8), hinter der ein zweiter Sensor (9) angeordnet ist, aufweist,
- der erste Sensor (7) direkt in den Garraum (3) gerichtet ist und
- der zweite Sensor (9) über eine reflektierende Fläche (10; 33; 43) des Mikrowellendoms (5; 12; 22; 32; 42) indirekt in den Garraum (3) gerichtet ist.

2. Haushalts-Mikrowellengerät (1; 11; 21; 31; 41) nach Anspruch 1, wobei der erste Sensor (7) eine optische Kamera ist, die reflektierende Fläche (10) eine Infrarotstrahlung reflektierende Fläche (10; 33; 43) ist und der zweite Sensor (9) eine IR-Kamera ist.

3. Haushalts-Mikrowellengerät (1; 11; 21) nach Anspruch 2, wobei die reflektierende Fläche (10) an einer Wand des Mikrowellendoms (5; 12; 22) aufgebracht ist.

4. Haushalts-Mikrowellengerät (31) nach Anspruch 2, wobei die reflektierende Fläche (33) an einem an dem Mikrowellendom (32) verschwenkbar angebrachten Spiegelelement (34) vorhanden ist und das Spiegelelement (34) zwei Endstellungen (P1, P2) aufweist, von denen in einer ersten Endstellung (P1) die optische Kamera (7) direkt und die IR-Kamera (9) über die reflektierende Fläche (33) des Spiegelelements (34) indirekt in dem Garraum (3) gerichtet ist und in einer zweiten Endstellung (P2) das Spiegelelement (34) zumindest die IR-Kamera (9) gegen den Garraum (3) abdeckt.

5. Haushalts-Mikrowellengerät (41) nach Anspruch 2, wobei die reflektierende Fläche (43) an einem an dem Mikrowellendom (42) verschwenkbar angebrachten Spiegelelement (44) vorhanden ist und das Spiegelelement (44) zwei Endstellungen (P1, P2) aufweist, von denen in einer ersten Endstellung (P1) das Spiegelelement (4) die IR-Kamera (9) gegen den Raum des Mikrowellendoms (42) abdeckt und in einer zweiten Endstellung (P2) die IR-Kamera (9) über die reflektierende (43) Fläche des Spiegelelements (34) indirekt in dem Garraum (3) gerichtet ist.

6. Haushalts-Mikrowellengerät (11; 21) nach einem der vorhergehenden Ansprüche, wobei die erste Sensoröffnung (6) mittels eines Abdeckelements (13) aus optisch durchlässigem Material dauerhaft abgedeckt ist.

7. Haushalts-Mikrowellengerät (11; 21) nach einem der vorhergehenden Ansprüche, wobei die zweite Sensoröffnung (8) mittels eines beweglichen Shutters (14) aus IR-undurchlässigem Material wahlweise abdeckbar und freigebbar ist.

8. Haushalts-Mikrowellengerät (11; 21) nach einem der vorhergehenden Ansprüche, wobei die Garraumöffnung (4) gegen den Mikrowellendom (5) mittels eines beweglichen Domabdeckelements (15) wahlweise abdeckbar und freigebbar ist.

9. Haushalts-Mikrowellengerät (11; 21) nach Anspruch 8, wobei das Domabdeckelement (15) optisch durchlässig und IR-undurchlässig ist.

10. Haushalts-Mikrowellengerät (1; 11; 21; 31; 41) nach einem der vorhergehenden Ansprüche, wobei die Sichtfelder (S1, S2) des ersten Sensors (7) und des zweiten Sensors (9) in dem Garraum (3) zumindest ungefähr übereinstimmen.

11. Haushalts-Mikrowellengerät (41) nach einem der vorhergehenden Ansprüche, wobei an dem Mikrowellendom (42) außenwandig an der zweiten Sensoröffnung (8) ein weiterer Dom (46) oder ein Kragen angebracht ist.

12. Haushalts-Mikrowellengerät (1; 11; 21; 31; 41) nach einem der vorhergehenden Ansprüche, wobei sich die erste Sensoröffnung (6) an einem weitesten von der Garraumöffnung (4) befindlichen Bereich des Mikrowellendoms (5; 12; 22; 32; 42) befindet.

## Claims

1. Household microwave appliance (1; 11; 21; 31; 41) having a cooking compartment (3) and a cooking compartment wall that surrounds the cooking compartment (3) with a cooking compartment opening (4) that is covered by a microwave dome (5; 12; 22; 32; 42) that is arranged remote from the cooking compartment, wherein
- the microwave dome (5; 12; 22; 32; 42) has at least one first sensor opening (6), behind which a first sensor (7) is arranged, and a second sensor opening (8), behind which a second sensor (9) is arranged,
- the first sensor (7) is oriented directly into the cooking compartment (3) and
- the second sensor (9) is oriented indirectly into the cooking compartment (3) via a reflecting surface (10; 33; 43) of the microwave dome (5; 12; 22; 32; 42).

2. Household microwave appliance (1; 11; 21; 31; 41) according to claim 1, wherein the first sensor (7) is an optical camera, the reflecting surface (10) is a surface (10; 33; 43) that reflects infrared radiation and the second sensor (9) is an IR camera.

3. Household microwave appliance (1; 11; 21) according to claim 2, wherein the reflecting surface (10) is attached to a wall of the microwave dome (5; 12; 22).

4. Household microwave appliance (31) according to claim 2, wherein the reflecting surface (33) is provided on a mirror element (34) that is attached to the microwave dome (32) in a pivotable manner and the mirror element (34) has at least two end positions (P1, P2) of which in a first end position (P1) the optical camera (7) is oriented directly in the cooking compartment (3) and the IR camera (9) is oriented indirectly in the cooking compartment (3) via the reflecting surface (33) of the mirror element (34) and in a second end position (P2) the mirror element (34) covers at least the IR camera (9) with respect to the cooking compartment (3).

5. Household microwave appliance (41) according to claim 2, wherein the reflecting surface (43) is provided on a mirror element (44) that is attached in a pivotable manner to the microwave dome (42) and the mirror element (44) has two end positions (P1, P2) of which in a first end position (P1) the mirror element (4) covers the IR camera (9) with respect to the space of the microwave dome (42) and in a second end position (P2) the IR camera (9) is oriented indirectly in the cooking compartment (3) via the reflecting surface (43) of the mirror element (34).

6. Household microwave appliance (11, 21) according to one of the preceding claims, wherein the first sensor opening (6) is permanently covered by means of a cover element (13) of optically transparent material.

7. Household microwave appliance (11; 21) according to one of the preceding claims, wherein the second sensor opening (8) can be selectively covered and revealed by means of a movable shutter (14) of material that is impermeable to infrared radiation.

8. Household microwave appliance (11; 21) according to one of the preceding claims, wherein the cooking compartment opening (4) can be selectively covered and revealed with respect to the microwave dome (5) by means of a movable dome cover element (15).

9. Household microwave appliance (11; 21) according to claim 8, wherein the dome cover element (15) is optically transparent and impermeable to infrared radiation.

10. Household microwave appliance (1; 11; 21; 31; 41) according to one of the preceding claims, wherein the fields of view (S1, S2) of the first sensor (7) and the second sensor (9) at least approximately conform in the cooking compartment (3).

11. Household microwave appliance (41) according to one of the preceding claims, wherein a further dome (46) or a collar is attached to the microwave dome (42) on the outer wall at the second sensor opening (8).

12. Household microwave appliance (1; 11; 21; 31; 41) according to one of the preceding claims, wherein the first sensor opening (6) is located in a region of the microwave dome (5; 12; 22; 32; 42) that is furthest from the cooking compartment opening (4).

## Revendications

1. Appareil à micro-ondes domestique (1, 11, 21, 31, 41), comprenant un espace de cuisson (3) et une paroi d'espace de cuisson entourant l'espace de cuisson (3) qui comporte une ouverture d'espace de cuisson (4), qui est recouverte par une protection contre les micro-ondes en forme de dôme (5, 12, 22, 32, 42) disposée endehors de l'espace de cuisson, dans lequel :
- la protection contre les micro-ondes en forme de dôme (5, 12, 22, 32, 42) comprend au moins une première ouverture de capteur (6), derrière laquelle est disposé un premier capteur (7), et une deuxième ouverture de capteur (8), derrière laquelle un deuxième capteur (9) est disposé,
- le premier capteur (7) pointe directement dans l'espace de cuisson (3),
- le deuxième capteur (9) pointe indirectement dans l'espace de cuisson (3) par l'intermédiaire d'une surface réfléchissante (10, 33, 43) de la protection contre les micro-ondes en forme de dôme (5, 2, 22, 32, 42).

2. Appareil à micro-ondes domestique (1, 11, 21, 31, 41) selon la revendication 1, dans lequel le premier capteur (7) est une caméra optique, la surface réfléchissante (10) est une surface réfléchissant un rayonnement infrarouge (10, 33, 43) et le deuxième capteur (9) est une caméra IR.

3. Appareil à micro-ondes domestique (1, 11, 21) selon la revendication 2, dans lequel la surface réfléchissante (10) est apposée sur une paroi de la protection contre les micro-ondes en forme de dôme (5, 2, 22).

4. Appareil à micro-ondes domestique (31) selon la revendication 2, dans lequel la surface réfléchissante (33) est présente sur un élément de miroir (34) disposé de façon pivotante sur la protection contre les micro-ondes en forme de dôme (32) et l'élément de miroir (34) comprend deux positions de fin de course (P1, P2), parmi lesquelles, dans une première position de fin de course (P1), la caméra optique (7) pointe directement dans l'espace de cuisson (3) et la caméra IR (9) pointe indirectement dans l'espace de cuisson (3) par l'intermédiaire de la surface réfléchissante (33) de l'élément miroir (34) et, dans une deuxième position de fin de course (P2), l'élément de miroir (34) recouvre au moins la caméra IR (9) par rapport à l'espace de cuisson (3).

5. Appareil à micro-ondes domestique (41) selon la revendication 2, dans lequel la surface réfléchissante (43) est présente sur un élément de miroir (44) disposé de façon pivotante sur la protection contre les micro-ondes en forme de dôme (42) et l'élément de miroir (44) comprend deux positions de fin de course (P1, P2), parmi lesquelles, dans une première position de fin de course (P1), l'élément de miroir (4) recouvre la caméra IR (9) par rapport à l'espace de la protection contre les micro-ondes en forme de dôme (42) et, dans une deuxième position de fin de course (P2), la caméra IR (9) est dirigée indirectement dans l'espace de cuisson (3) par l'intermédiaire de la surface réfléchissante (43) de l'élément de miroir (34).

6. Appareil à micro-ondes domestique (11, 21) selon l'une des revendications précédentes, dans lequel la première ouverture de capteur (6) est recouverte de façon permanente au moyen d'un élément de recouvrement (13) constitué d'un matériau optiquement transparent.

7. Appareil à micro-ondes domestique (11, 21) selon l'une des revendications précédentes, dans lequel la deuxième ouverture de capteur (8) peut être recouverte et dégagée sélectivement au moyen d'un obturateur mobile (14) constitué d'un matériau opaque à l'IR.

8. Appareil à micro-ondes domestique (11, 21) selon l'une des revendications précédentes, dans lequel l'ouverture d'espace de cuisson (4) peut être recouverte ou dégagée sélectivement vis-à-vis de la protection contre les micro-ondes en forme de dôme (5) au moyen d'un élément de recouvrement de dôme mobile (15).

9. Appareil à micro-ondes domestique (11, 21) selon la revendication 8, dans lequel l'élément de recouvrement de dôme (15) est optiquement transparent et opaque au rayonnement IR.

10. Appareil à micro-ondes domestique (1, 11, 21, 31, 41) selon l'une des revendications précédentes, dans lequel les champs de vision (S1, S2) du premier capteur (7) et du deuxième capteur (9) dans l'espace de cuisson (3) coïncident au moins approximativement.

11. Appareil à micro-ondes domestique (41) selon l'une des revendications précédentes, dans lequel un dôme supplémentaire (46) ou une collerette est disposé sur la protection contre les micro-ondes en forme de dôme (42), sur la paroi extérieure de la deuxième ouverture de capteur (8).

12. Appareil à micro-ondes domestique (1, 11, 21, 31, 41) selon l'une des revendications précédentes, dans lequel la première ouverture de capteur (6) se trouve au niveau d'une région de la protection contre les micro-ondes en forme de dôme (5, 12, 22, 32, 42) la plus éloignée de l'ouverture de l'espace de cuisson (4).
